# EUROPEAN PATENT SPECIFICATION

(11) **EP 0 395 565 B1**
(45) Date of publication and mention of the grant of the patent: **18.12.1996**
(21) Application number: 90500043.6
(22) Date of filing: 20.04.1990
(51) Int. Cl.: F16F 9/348

(54) **Valve for double tube shock absorbers**
Ventil für Zweirohrstossdämpfer
Clapet pour amortisseurs de chocs à double tube

(30) Priority: 27.04.1989 ES 8901357
(43) Date of publication of application: 31.10.1990
(73) Proprietor: QUINTON HAZELL ESPANA, S.A., 01400 Areta-Llodio (Alava) (ES)
(72) Inventor: Marcos Munoz, Juan Jose, Lejona, Vizcaya (ES)
(74) Representative: Carpintero Lopez, Francisco

(56) References cited:
- DE-A- 2 731 015
- FR-A- 2 420 060
- US-A- 2 726 737
- US-A- 3 346 272
- PATENT ABSTRACTS OF JAPAN, vol. 13, no. 225 (M-830)(3573), 25th May 1989; JP-A-01 40 731 (ATSUGI MOTOR PARTS CO., LTD) 13-02-1989 (Cat. X)

## Description

### OBJECT OF THE INVENTION

The present invention relates to.a valve for double tube shock absorbers, i.e., for shock absorbers comprising two coaxial tubes, which in turn define two coaxial chambers wherein is housed the piston and its relevant shaft, such that in the position of maximum retraction of the latter the two chambers defined by the piston are practically equivalent to the inner chamber and the surrounding chamber defined by the two mentioned tubes.

### BACKGROUND OF THE INVENTION

The functional idea behind the shock absorbers is based on the creation by the piston of the two previously mentioned chambers, and in the provision in the said piston of apertures for the passage of fluid between the two chambers, adequately sized to obtain predefined streams of fluid to establish a specific speed in the exchange of fluid from one chamber to the other and thus a restriction or brake for the piston, and consequently an absorbing effect for the shaft related thereto.

When dealing with a double tube shock absorber, a valve for regulating the passage of fluid between the two chambers is additionally provided at its end area for communication therebetween.

But furthermore, since the speed of exchange of fluid in one direction, i.e., from one chamber to the other, must be different from the speed of exchange in the opposite direction in order to obtain an optimum absorbing effect, the mere provision of calibrated apertures in the valve element is not sufficient, since such apertures alone would imply an identical flow in both directions, wherefore respective washers are coaxially coupled to one or both surfaces of the valve body to act as stoppers for the said apertures, and are of an elastic nature, such that when the fluid pressure tends to adapt the washers against the valve body a perfect closure is established on the set of apertures covered by such washers, whereas when the pressure of the fluid is in the opposite direction, the washers are elastically deformed, moving away from their seats and thereby allowing the passage of fluid.

This solution, although perfectly acceptable from an operative point of view, has as a practical problem the fact that because the washers are very thin and work with a fluid, they tend to "stick" to the flat surface of the seats thereof, which implies abrupt movement thereof with a "knocking" sound which, although in no way negatively influencing operation of the absorber, implies a tiresome and undesirable noise.

A further development can be found in U.S. Patent No. 2,726,737 (preamble of claim 1), which relates to a shock absorber provided at its inner tube end with a valve body, which valve is provided for the fluid passage with a single main and central aperture, one of the aperture's end being closed by means of a line contact between the washer and the valve body, the said contact and coupling being achieved by means of a self-fitted and floating central axis being fastened at the closure washers by both ends.

### DESCRIPTION OF THE INVENTION

The valve for double tube shock absorbers proposed by the invention has been designed and structured such that this problem may be fully and satisfactorily solved, specifically by completely eliminating the noise problems described above.

More specifically, and in order to achieve the above, the valve for double tube shock absorbers being described, whilst maintaining the structural and functional characteristics of a conventional valve of this type, centres its characteristics on the fact that the seats for the mentioned elastic washers are made as active edges, defining linear support for the said elastic washers, with a practically non-existent surface area, whereby, whilst maintaining optimum characteristics with regard to closure or plugging, conventional noises disappear, since the usual contact between flat elements of considerable surface area likewise disappears. The invention foresees the disposition of washers provided with holes which face some apertures of the body to establish permanent communication whilst plugging other apertures and all these appertures been assisted on their fluid passage closure, by means of washers, and their closure contact being linear.

### DESCRIPTION OF THE DRAWINGS

In order to complete the description being made, and to assist the better understanding of the characteristics of the invention, a single page of drawings is attached to the present specification, as an integral part thereof, where the following has been shown in an illustrative and non-limiting manner:

Figure 1 shows a partial diametrical section of a double tube shock absorber provided with the valve which constitutes the object of the present invention, along the end area corresponding to the location of the said valve.

Figure 2 shows a larger scale view, likewise in diametrical section, of the said valve.

### PREFERRED EMBODIMENT OF THE INVENTION

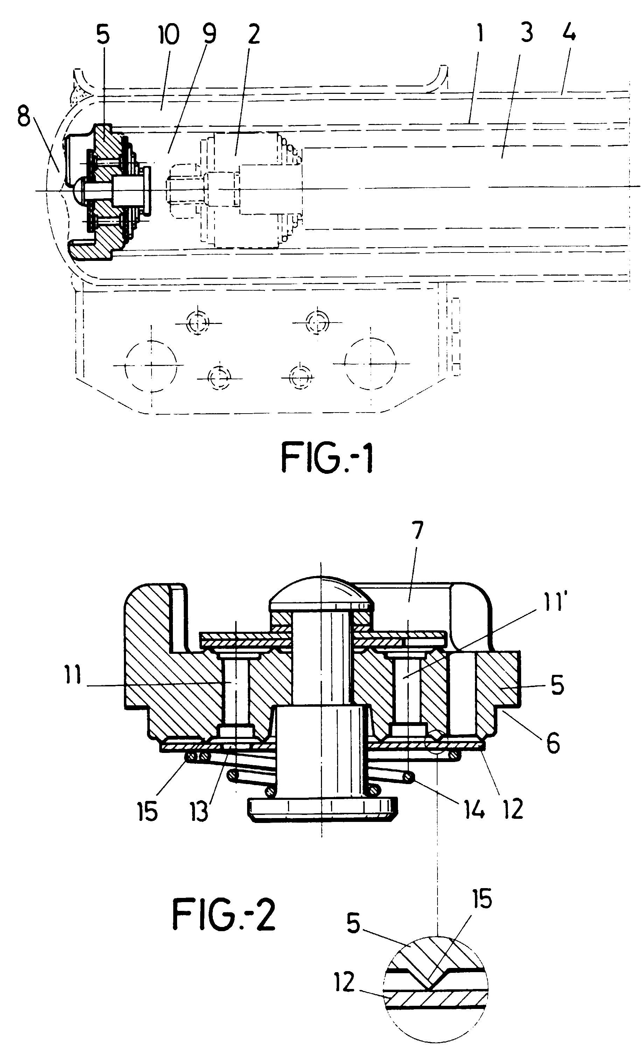

In the light of these figures, and more specifically of figure 1, it can be observed how the valve being described is applicable to a double tube shock absorber, wherein there is provided an internal cylindrical tube (1) wherein plays the corresponding piston (2) related to shaft (3) of the shock absorber, which tube (1) is housed within a further tube (4) of larger diameter, the said tubes (1) and (4) being related at the end opposite that of emergence of shaft (3) with the aid of the valve object of the invention, the body (5) whereof is provided with a perimetral stepping (6) for coupling of the inner end of the tube (1), whereas as a complement to the said stepping (6) there are provided support flaps (7) for the bottom or end (8) of the shock absorber, which allow communication between the inner chamber (9) and the outer chamber (10) of the absorber.

Valve body (5), as can be specifically observed from figure 2 on a larger scale, is provided with apertures (11) for communication between the said chambers (9) and (10), which apertures are of suitable size and are aided in turn at their mouths by elastic washers (12) which are provided with holes (13) which face apertures (11) of body (5) to establish permanent communication whilst plugging other apertures (11'), thereby completely preventing passage of fluid in a certain direction, specifically from chamber (9) to chamber (10), nevertheless allowing return thereof, by means of elastic deformation of the washer (12) itself, or through the axial displacement thereof against the spring (14).

In any case, and in order to avoid the said problems of noise produced by the knocking of the washers (12) on valve body (5), it has been foreseen that seats (15) are of linear design, as observed from the enlarged detail of figure 2, made specifically as a circumferential patch, such that contact between the washer (12) and the body (5) is not a "surface" contact, as is conventionally the case, i.e. contact via a circular crown of considerable radial dimensions, but rather a "linear" contact, with a practically negligible surface area, whereby the noise produced by the knocking of the washer or washers against the body is practically nil, since with this configuration the usual problems of adherence between flat and lubricated surfaces disappear.

## Claims

1. Valve for double tube shock absorbers, being housed at the end of an inner tube (1) which is provided with apertures (11, 11') for the fluid passage across the same, the apertures (11, 11') being aided by closure washers (12) and their closure being effected by means of a line contact between the washer (12) and a piston body (5), characterised in that the washers (12) are provided with holes (13) which face some apertures (11) of the body (5) to establish permanent communication whilst plugging other apertures (11'), and in that all these apertures (11, 11') been assisted on their fluid passage closure, by means of washers (12), and their closure contact being linear.

## Patentansprüche

1. Ventil für Zweirohrstossdämpfer, das am Ende eines Innenrohrs (1) angeordnet wird und öffnungen (11, 11') für den Durchfluss des Mittels durch diese Öffnungen (11, 11') aufweist und von Unterlegscheiben (12) für die Abdichtung unterstützt wird, wobei der Verschluss mit Hilfe eines linearen Kontakts zwischen den Scheiben (12) und dem Körper des Kolbens (5) erfolgt, dadurch gekennzeichnet, dass die Unterlegscheiben (12) mit Öffnungen (13) ausgestattet sind, die Öffnungen (11) des Körpers (5) gegenüberliegen, um eine ständige Verbindung herzustellen, während andere Öffnungen (11') abgedichtet werden, und dass die gesamten Öffnungen (11, 11') bei der Unterbindung des Durchflusses durch ein Verschliessen der linear aufliegenden Unterlegscheiben (12) unterstützt werden.

## Revendications

1. Clapet pour amortisseurs de chocs à double tube incorporé sur l'extrémité d'un tube intérieur (1) qui dispose d'orifices (11, 11') pour le passage du fluide à travers lui, les orifices (11, 11') étant assistés par des rondelles de fermeture (12) et leur fermeture étant réalisée moyennant un contact linéaire entre la rondelle (12) et un corps du piston (5), caractérisée par le fait que les rondelles (12) soient pourvues d'orifices (13) qui se trouvent en face d'orifices (11) du corps (5) pour établir une communication permanente tandis qu'ils obturent d'autres orifices (11') et parce que tous ces orifices (11, 11') sont assistés dans leur fermeture de passage de fluide à l'aide de rondelles (12) leur contact ayant une fermeture linéaire.
